(19) Europäisches Patentamt

European Patent Office

Office européen des brevets

(11) **EP 1 178 336 A1**

(12) **EUROPEAN PATENT APPLICATION**
published in accordance with Art. 158(3) EPC

(43) Date of publication:
**06.02.2002 Bulletin 2002/06**

(51) Int Cl.⁷: **G02B 6/10**, G02B 6/16,
G02B 6/36, C04B 35/18

(21) Application number: **00906638.2**

(22) Date of filing: **02.03.2000**

(86) International application number:
**PCT/JP00/01239**

(87) International publication number:
**WO 00/55659 (21.09.2000 Gazette 2000/38)**

(84) Designated Contracting States:
**AT BE CH CY DE DK ES FI FR GB GR IE IT LI LU MC NL PT SE**

(30) Priority: **12.03.1999 JP 6733999**

(71) Applicant: **NIPPON ELECTRIC GLASS COMPANY, Limited
Otsu-shi, Shiga 520-8639 (JP)**

(72) Inventors:
• **MATANO, Takahiro,
Nippon Electric Glass Co., Ltd
Otsu-shi, Shiga 520-8639 (JP)**

• **SAKAMOTO, Akihiko,
Nippon Electric Glass Co., Ltd
Otsu-shi, Shiga 520-8639 (JP)**
• **TAKEUCHI, Hirokazu,
Nippon Electric Glass Co., Ltd
Otsu-shi, Shiga 520-8639 (JP)**

(74) Representative: **Tetzner, Michael, Dipl.-Ing. et al
Van-Gogh-Strasse 3
81479 München (DE)**

(54) **TEMPERATURE COMPENSATION DEVICE FOR OPTICAL COMMUNICATION**

(57) A base member having a negative coefficient of thermal expansion of -10 to -120 $\times$ 10$^{-7}$/°C within a temperature range of -40 to 100 °C is provided with an inner bore formed at a predetermined position thereof. An optical component having a positive coefficient of thermal expansion is disposed in the inner bore. Further, the optical component is fixed to the base member at a plurality of particular positions spaced from one another in an axial direction of the inner bore.

# FIG. 3

EP 1 178 336 A1

## Description

Technical Field

This invention relates to a temperature compensated device for use in optical communication, which uses a base member having a negative coefficient of thermal expansion.

Background Art

With the advance of the optical communication technology, a network using optical fibers has been rapidly built up. In the network, a wavelength multiplexing technique of collectively transmitting light beams having a plurality of different wavelengths has come into use, and a wavelength filter, a coupler, a waveguide, and the like have become important devices.

Some of the devices of the type described are changed in characteristics depending upon the temperature and may therefore cause troubles if used in the outdoors. This requires a technique for keeping the characteristics of these devices fixed or unchanged regardless of a temperature change, i.e., a so-called temperature compensation technique.

As a typical optical communication device which requires temperature compensation, there is a fiber Bragg grating (hereinbelow, referred to as FBG). The FBG is a device in which a portion varied in refractive index in a grating-like pattern, i.e., a so-called grating is formed within a core of an optical fiber, and has a characteristic of reflecting a light beam having a specific wavelength according to the relationship represented by the following formula (1). Therefore, the device attracts attention as an important optical device in the optical communication system using a wavelength division multiplex transmission technique in which optical signals different in wavelengths are multiplexed and transmitted through a single optical fiber.

$$\lambda = 2n\Lambda \qquad (1)$$

Herein, $\lambda$ represents a reflection wavelength, n, an effective refractive index of the core, and $\Lambda$, a grating period of the portion varied in refractive index in the grating-like pattern.

However, the above-mentioned FBG has a problem that the reflection wavelength will be varied following the change in ambient temperature. The temperature dependency of the reflection wavelength is represented by the following formula (2) which is obtained by differentiating the formula 1 with the temperature T.

$$\partial \lambda/\partial T = 2\{(\partial n/\partial T)\Lambda + n(\partial \Lambda/\partial T)\}$$

$$= 2\Lambda\{(\partial n/\partial T) + n(\partial \Lambda/\partial T)/\Lambda\} \qquad (2)$$

The second term of the right side of the formula (2), i.e., $(\partial \Lambda/\partial T)/\Lambda$ corresponds to a coefficient of thermal expansion of the optical fiber and has a value approximately equal to $0.6 \times 10^{-6}/°C$. On the other hand, the first term of the right side corresponds to the temperature dependency of the refractive index of the core of the optical fiber and has a value approximately equal to $7.5 \times 10^{-6}/°C$. Thus, it will be understood that the temperature dependency of the reflection wavelength depends upon both the variation in refractive index of the core and the change in grating period due to the thermal expansion but mostly results from the temperature-dependent variation of the refractive index.

As means for avoiding the above-mentioned variation in reflection wavelength, there is known a method in which the FBG is applied with tension depending upon the temperature change to thereby change the grating period so that a component resulting from the variation in refractive index is cancelled.

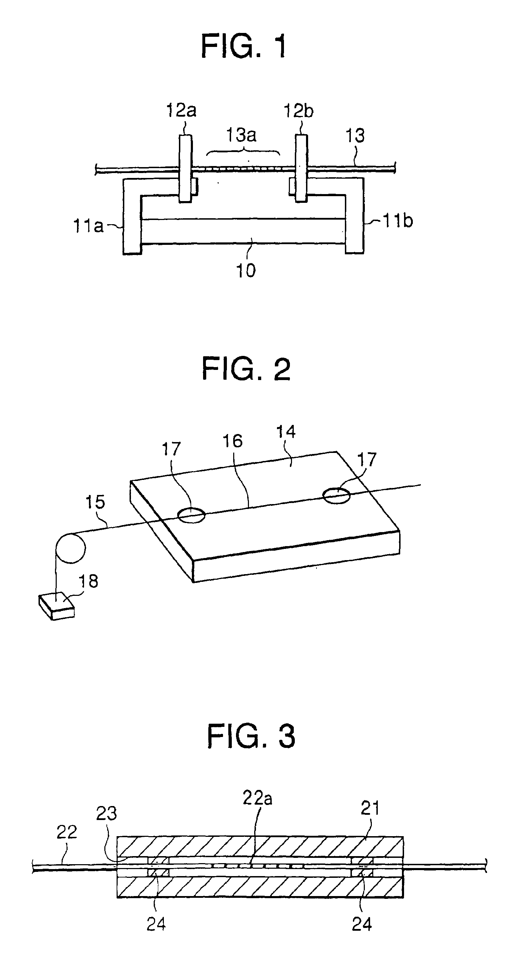

As a specific example of the above-mentioned method, proposal is made of a method in which the FBG is fixed to a temperature compensation member which comprises a combination of a material, such as an alloy or a silica glass, having a small coefficient of thermal expansion and a metal, such as aluminum, having a large coefficient of thermal expansion. Specifically, as shown in Fig. 1, an Invar (Registered Trademark) bar 10 having a small coefficient of thermal expansion has opposite ends provided with aluminum brackets 11 a and 11 b having a relatively large coefficient of thermal expansion attached thereto, respectively. An optical fiber 13 is fixed to these aluminum brackets 11a and 11 b by the use of clasps 12a and 12b so that the optical fiber is stretched under a predetermined tension. At this time, adjustment is made so that a grating portion 13a of the optical fiber 13 is located between the two clasps 12a and 12b.

If the ambient temperature rises in the above-mentioned state, the aluminum brackets 11 a and 11 b are expanded to reduce the distance between the two clasps 12a and 12b so that the tension applied to the grating portion 13a of the optical fiber 13 is decreased. On the other hand, as the ambient temperature falls, the aluminum brackets 11 a and 11b are contracted to increase the distance between the two clasps 12a and 12b so that the tension applied to the grating portion 13a of the optical fiber 13 is increased. Thus, by changing the tension applied to the FBG depending upon the temperature change, it is possible to adjust the grating period of the grating portion. As a result, it is possible to cancel the temperature dependency of the reflection center wavelength.

However, the above-mentioned temperature compensated device is disadvantageous in that the structure is complicated and the handling is difficult.

As a method for solving the above-mentioned problems, WO97/26572 discloses a method of controlling the tension applied to an FBG 15 by fixing the FBG 15 to a glass ceramics substrate 14 obtained by heat treating and crystallizing a mother glass material preliminarily shaped into a plate and having a negative coefficient of thermal expansion, as illustrated in Fig. 2. In Fig. 2, the reference numeral 16 represents a grating portion, 17, an adhered and fixed portion, and 18, a weight.

The method disclosed in the WO97/26572 is advantageous in that the structure is simple and the handling is easy because temperature compensation is achieved by a single component. However, since the FBG 15 is adhered to one surface of the glass ceramics substrate 15, it is required to increase the thickness of the substrate so that the substrate does not warp upon expansion of the substrate due to change in temperature.

Further, in order to connect the substrate 14 mentioned above to another device, a connector is additionally required. This results in various problems such as an increase in number of connecting portions, an increase in optical loss, an increase in device cost, and an increase in size of the device.

In addition, Japanese Unexamined Patent Publication JP 10-96827 A discloses a temperature compensation member made of a Zr-tungstate system material or a Hf-tungstate system material and having a negative coefficient of thermal expansion. However, since these materials are very expensive, it is difficult to put the disclosed one into practical use as an industrial product.

Moreover, Japanese Unexamined Patent Publication JP 8-286040 A discloses a temperature compensation member (fixing member) smaller in coefficient of thermal expansion than a glass fiber. This temperature compensation member is produced from a material having a positive coefficient of thermal expansion which is smaller than $5.5 \times 10^{-7}/°C$ as the coefficient of thermal expansion of silica glass or from a material having a zero or negative coefficient of thermal expansion. However, no suggestion is made at all about a temperature compensation member having a negative coefficient of thermal expansion which is sufficient.

Specifically, Japanese Unexamined Patent Publication JP 8-286040 A mentions as if a sufficient temperature compensation effect is obtained by the use of a temperature compensation member smaller in coefficient of thermal expansion than the glass fiber. However, this understanding is completely erroneous. Specifically, as apparent from the above-mentioned formula (1), use of a material having a positive coefficient of thermal expansion as a temperature compensation member does not provide a sufficient temperature compensation effect. In addition, as a specific material, mention is made of Neoceram N-0 manufactured by Nippon Electric Glass Co., Ltd., which has a coefficient of thermal expansion nearly equal to zero. However, even by the use of Neoceram N-0, it is impossible to obtain a sufficient temperature compensation effect because the negative coefficient of thermal expansion is too small.

Therefore, it is an object of this invention to provide a compensated device for use in optical communication, which can be reduced in size and simple in structure and which has a sufficient temperature compensation effect.

It is another object of this invention to provide a temperature compensated device for use in optical communication, which can be formed easily and at a low cost and which is capable of realizing simplification of a manner of connection to an optical fiber.

Disclosure of the Invention

According to this invention, there is provided a temperature compensated device for use in optical communication, which comprises a base member having a negative coefficient of thermal expansion of -10 to -120 $\times 10^{-7}/°C$ within a temperature range of -40 to 100 °C and provided with an inner bore formed at a predetermined position thereof and an optical component disposed in the inner bore and having a positive coefficient of thermal expansion, the optical component being fixed to the above-mentioned base member at a plurality of particular positions spaced from one another in an axial direction of the inner bore.

Brief Description of the Drawing

Fig. 1 is a front view showing an existing apparatus for preventing variation in reflection wavelength of an FBG in response to change in temperature.

Fig. 2 is a perspective view showing a glass ceramics substrate having a negative coefficient of thermal expansion with an FBG fixed to its surface.

Fig. 3 is a sectional view of a temperature compensated device for use in optical communication according to an embodiment of this invention.

Fig. 4 is a perspective view of a base member used in the temperature compensated device for use in optical communication illustrated in Fig. 3.

Fig. 5 is a perspective view of a modification in shape of the base member of Fig. 4.

Fig. 6 is a perspective view of another modification in shape of the base member of Fig. 4.

Fig. 7 is a perspective view of still another modification of the base member of Fig. 4.

Fig. 8 is a perspective view of a modification in production of the base member of Fig. 4.

Fig. 9 is a perspective view of a modification in shape of the base member of Fig. 8.

Fig. 10 is a perspective view of a modification in production of the base member of Fig. 9.

Best Mode for Embodying the Invention

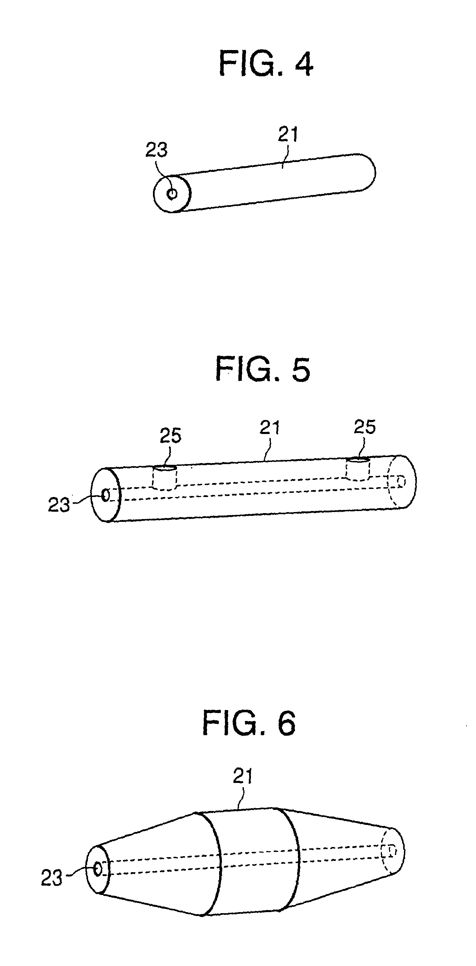

Referring to Figs. 3 and 4, description will be made about a temperature compensated device for use in optical communication according to an embodiment of this invention. The temperature compensated device for use in optical communication shown in the figures comprises a base member 21 having a negative coefficient of thermal expansion of -10 to -120 X $10^{-7}/°C$ within a temperature range of -40 to 100 °C and an optical component 22 having a positive coefficient of thermal expansion. Herein, the base member 21 is a circular tube member provided with a cylindrical inner bore 23 formed at a predetermined position to penetrate therethrough. The optical component 22 comprises an optical fiber including a Bragg grating portion 22a, is inserted into the inner bore 23 of the base member 21, and is fixed to the base member 21 via adhered and fixed portions 24 placed at a plurality of particular positions spaced from one another in an axial direction of the inner bore 23.

With the above-mentioned temperature compensated device for use in optical communication, it is possible to obtain a sufficient temperature compensation effect. In addition, even in case where the optical component 22 is applied with tension, a deformation such as a warp hardly occurs because stress balance is kept around the inner bore 23. It is therefore unnecessary to increase the size of the base member 21. Further, stress can be applied to the optical component 22 uniformly from the entire circumference of the base member 21 so that the durability of the optical component 22 can be improved. Moreover, since the optical component 22 can be protected, no protective cover is required so that the reduction in size can be realized.

When the coefficient of thermal expansion of the base member 21 is shifted in a positive direction from -10 $\times$ $10^{-7}/°C$, temperature compensation is insufficient. On the other hand, when the coefficient of thermal expansion is increased from -120 $\times$ $10^{-7}/°C$ in a negative direction, temperature dependency in a reverse direction will appear. Preferably, the coefficient of thermal expansion of the base member 21 falls within a range of -30 to -90 $\times$ $10^{-7}/°C$.

The number of the inner bore 23 of the base member 21 is not restricted to one but may be plural.

In order to fix the optical component 22 to the base member 21, use may be made of an adhesive. In this event, it is preferable to form one or a plurality of small holes 25 communicating with the inner bore 23 as shown in Fig. 5 because the adhesive can be easily injected into the inner bore 23. As the adhesive, use may be made of a polymer (for example, epoxy resin), a metal (metal solder such as Au-Sn), a frit (for example, a glass frit having a low melting point or a composite frit comprising the glass frit and a negative-expansion filler), thermosetting resin, ultraviolet-curable resin, and so on.

Preferably, the optical component 22 is preliminarily applied with tension prior to fixation so that the optical component 22 is not bent even when the base member 21 is contracted. An area between the adhered and fixed portions 24 may also be fixed to the base member 21. In this event, there is an advantage that the optical component 22 is hardly bent and therefore need not be applied with tension.

The base member 21 may be directly formed from a molten glass by down drawing or may be formed by preliminarily forming the molten glass into a preform and then machining the preform into a predetermined shape.

The base member 21 may be prepared by accumulating or integrating crystal powder exhibiting anisotropy in coefficient of thermal expansion and thereafter sintering the same. According to this method, even if the base member 21 has a complicated shape, formation can be easily performed at a low cost by a forming technique such as pressing, casting, or extrusion. When the crystal powder is accumulated, it is preferable to use an organic binder because a sintered body having a desired shape is easily obtained.

In the event that the crystal powder particles having anisotropic coefficients of thermal expansion are used as a material for preparation of the base member 21, a large number of microcracks are produced in a crystal grain boundary during cooling of the crystal particles grown in the sintering process so that a desired coefficient of thermal expansion is obtained. The respective crystal powder particles having anisotropic coefficients of thermal expansion expand or contract in various directions according to the coefficients of thermal expansion in their crystal axis directions during heat treatment. As a result, the powder particles are rearranged with respect to one another to increase the filling density and to increase contact areas between the particles. This promotes the tendency such that the powder particles are fused to one another during the heat treatment to minimize the surface energy. As a result, a ceramics base member having high strength, specifically, bending strength of 10 MPa or more is obtained. In order to increase the contact area between the powder particles, it is desirable that the crystal powder has a particle size of 50 μm or less.

The crystal powder exhibiting anisotropy in coefficient of thermal expansion is a crystal having a negative coefficient of thermal expansion in at least one crystal axis direction and a positive coefficient in other axis directions. As typical examples of the crystal powder exhibiting anisotropy in coefficient of thermal expansion, use may be made of powder of silicate represented by β-eucryptite crystals and β-quartz solid solution crystals, titanate such as $PbTiO_3$, phosphate such as $NbZr(PO_4)_3$, and oxide of La, Nb, V, or Ta. Among others, β-eucryptite crystal powder exhibits large anisotropy in coefficient of thermal expansion so that a coefficient of thermal expansion of -10 to -120 $\times$ $10^{-7}/°C$ is easily ob-

tained. Furthermore, β-eucryptite crystal powder prepared by a so-called solid-phase method of mixing and firing raw material powder is advantageous in that production at a low cost is possible because synthesis can be performed at a low temperature and pulverization is easy as compared with β-eucryptite crystal powder prepared by a melting method in which the raw material is at first melted.

To the above-mentioned crystal powder, a different kind of crystal powder can be mixed. By using two or more kinds of crystal powder in combination, it is easier to adjust the coefficient of thermal expansion, the strength or the chemical characteristics.

To the above-mentioned crystal powder, one kind or two or more kinds of additives such as amorphous glass powder, crystallizable glass powder, partially-crystallized glass powder, glass powder prepared by a sol-gel method, sol, and gel may be added in a ratio of 0.1 to 50 volume %. Thereafter, the mixture is sintered. In this manner, it is possible to further improve the bending strength. It is noted here that the crystallizable glass powder is glass powder having a property such that crystals are precipitated inside as a result of heat treatment. The partially-crystallized glass powder is crystallized glass powder with crystals precipitated in the glass.

Preferably, the base member 21 has an external shape in a circular cross section or a rectangular cross section. In that case, the base member 21 can be directly inserted into a connector outer tube (not shown) provided with a sleeve having the shape of a circular tube or a rectangular tube. With this structure, the base member 21 serves as a positioning component for positioning another optical communication device and the optical component 22. Thus, connection can be carried out with high accuracy.

Preferably, the base member 21 has an end portion formed into a tapered shape reduced in diameter towards its tip end, as shown in Fig. 6. With this structure, the base member 21 is easily inserted into the connector outer tube.

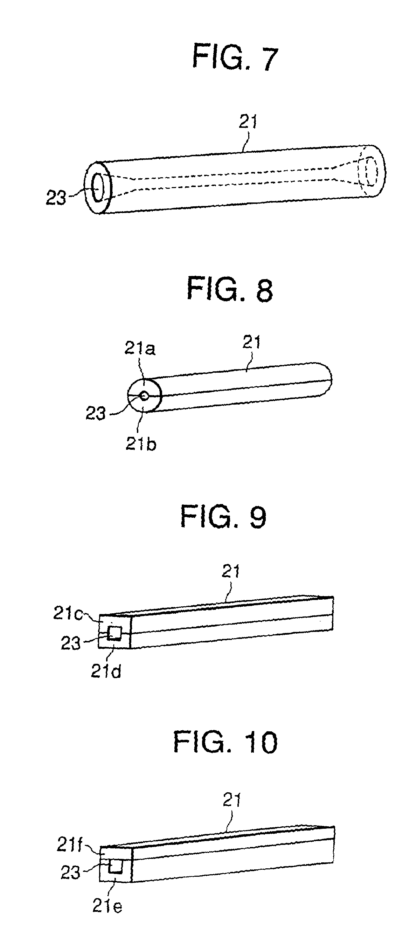

Preferably, the inner bore 23 of the base member 21 has an end portion formed into a tapered shape increased in diameter towards to its tip end, as shown in Fig. 7. With this structure, the optical component 22 is easily inserted into the inner bore 23.

As shown in Fig. 8, the base member 21 may be a circular tube member prepared by preliminarily forming two parts 21a and 21b each having a semicircular cross section and coupling them to each other. As shown in Fig. 9, the base member 21 may be a rectangular tube member prepared by preliminarily forming two parts 21c and 21d each having a U-shaped cross section and coupling them to each other. Moreover, as shown in Fig. 10, the base member 21 may be a rectangular tube member prepared by preliminarily forming a part 21e having a U-shaped cross section and a part 21f of a plate-like shape and coupling them to each other.

By coupling a plurality of parts to each other as mentioned above, it is possible to easily prepare base members having various shapes.

In case where a temperature compensated device for use in optical communication of this invention is produced from a plurality of parts as mentioned above, production may be carried out by disposing the optical component 22 having a positive coefficient of thermal expansion in a groove portion of each of the part 21b having a semicircular cross section and the parts 21d and 21e having a U-shaped cross section, and thereafter coupling each of the corresponding parts 21a, 21c and 21f. Alternatively, production may be carried out by coupling the parts to each other and thereafter inserting the optical component 22 through the inner bore 23 formed therebetween.

In case where the base member 21 or the parts 21a to 21f are produced from a glass by melting, use may be made of a method in which a glass having a composition of, by weight percent, 43-63 % $SiO_2$, 33-43 % $Al_2O_3$, 7-11 % $Li_2O$, 0-6 % $ZrO_2$, 0-6 % $TiO_2$, 0-6 % $SnO_2$ and 0-6 % $P_2O_5$ or a glass having a composition of, by weight percent, 50-75 % $SiO_2$, 15-30 % $Al_2O_3$, 3-7 % $Li_2O$, 0-5 % $ZrO_2$, 0-6 % $TiO_2$, 0-7 % $SnO_2$ and 0-6 % $P_2O_5$ is subjected to heat treatment to thereby precipitate a large number of β-eucryptite crystals or β-quartz solid solution crystals inside.

Hereinbelow, description will be made about various samples of temperature compensated devices for use in optical communication.

(Sample 1)

β-eucryptite crystal powder prepared by the solid-phase method was mixed with an organic binder (ethyl cellulose) The mixture was put in a mold and press-formed to thereby prepare a compact body having the shape of a circular tube. The compact body was heated under the conditions of 1300 °C and 10 hours and then cooled at a temperature falling rate of 200 °C/hour to thereby prepare a sintered body having the shape of a circular tube. In the crystals of the sintered body having the shape of a circular tube, a large number of microcracks were formed. The coefficient of thermal expansion was -80 × $10^{-7}$/°C in a temperature range of -40 to 100 °C.

Into the inner bore of the above-mentioned sintered body having the shape of a circular tube, a positive-expansion optical component which comprised an optical fiber containing silica as a main component and provided with a refractive index grating, was inserted. In the state where the optical fiber was applied with tension, the optical fiber was adhered and fixed at the both ends of the inner bore by the use of epoxy resin.

In order to examine the temperature compensating performance of the temperature compensated device for use in optical communication thus obtained, a test (using a temperature range of -40 °C to 100 °C) was carried out and comparison was made with the case where a device without temperature compensation is used. As a result, in case of the device without temperature compensation, temperature dependency of 0.012 nm/°C was exhibited at a reflection center wavelength of 1550 nm. On the other hand, in case of the device of the embodiment, temperature dependency of 0.001 nm/°C was exhibited. Thus, the temperature dependency was remarkably improved.

(Sample 2)

At first, a glass material was prepared to have a composition of, by weight percent, 46.5 % $SiO_2$, 41.0 % $Al_2O_3$, 9 % $Li_2O$, and 3.5 % $ZrO_2$. Thereafter, the glass material was melted in a platinum crucible, then formed into a plate-like shape, and cut into the shape of a circular tube to thereby form a glass body having a diameter of 3 mm, an inner diameter of 0.5 mm, and a length of 40 mm. Then, the glass body was heated at a temperature rising rate of 200 °C/hour and held at 760 °C for 3 hours and at 1350 °C for 10 hours. Thereafter, the glass body was cooled at a temperature falling rate of 200 °C /hour to thereby prepare a crystallized glass body. The crystallized glass body thus obtained contained β-eucryptite crystals as main crystals, with a large number of microcracks formed in the crystals. The coefficient of thermal expansion was -70 $\times$ $10^{-7}$/°C in a temperature range of -40 to 100 °C.

By using the crystallized glass body having the shape of a circular tube as a base member, preparation was made of a temperature compensated device for use in optical communication similar to Sample 1. The temperature compensating performance was examined. As a result, temperature dependency of 0.001 nm/°C was exhibited at the reflection center wavelength of 1550 nm.

(Sample 3)

By cutting a crystallized glass body prepared in the manner similar to Sample 2, preparation was made of two parts including a crystallized glass body having a U-shaped cross section and a crystallized glass body of a plate shape. Next, by coupling these parts to each other by the use of epoxy resin, a rectangular tube member having an inner bore was produced.

By using the rectangular tube member as a base member, preparation was made of a temperature compensated device for use in optical communication similar to Sample 2. The temperature compensating performance was examined. As a result, temperature dependency of 0.001 nm/°C was exhibited at the reflection center wavelength of 1550 nm.

(Sample 4)

The glass of Sample 2 was melted, then formed into a film-like shape, and pulverized by a ball mill. Next, the glass powder was put in a mold and then press-formed to thereby prepare a compact body of a plate-like shape. This compact body of a plate-like shape was heated and cooled under the conditions similar to Sample 2 to thereby prepare a crystallized glass body. Then, by cutting the crystallized glass body, two parts comprising crystallized glass bodies each having a U-shaped cross section were prepared. Thereafter, by coupling the end portions of these parts to each other by the use of epoxy resin, a rectangular tube member having an inner bore was produced.

Into the inner bore of the above-mentioned sintered body having the shape of a rectangular tube, a positive-expansion optical component, which comprised an optical fiber containing silica as a main component and provided with a refractive index grating, was inserted. In the state where the optical fiber was applied with tension, the optical fiber was adhered and fixed by filling epoxy resin in the inner bore.

In order to examine the temperature compensating performance of the temperature compensated device for use in optical communication thus obtained, a test similar to Sample 1 was carried out. As a result, temperature dependency of 0.001 nm/°C was exhibited at the reflection center wavelength of 1550 nm.

Industrial Applicability

The temperature compensated device for use in optical communication according to this invention is suitable as a temperature compensated device including not only a fiber Bragg grating but also a coupler and a waveguide.

**Claims**

1. A temperature compensated device for use in optical communication, which comprises a base member having a negative coefficient of thermal expansion of -10 to -120 $\times$ $10^{-7}$/°C within a temperature range of -40 to 100 °C and provided with an inner bore formed at a predetermined position thereof and an optical component disposed in said inner bore and having a positive coefficient of thermal expansion, said optical component being fixed to said base member at a plurality of particular positions spaced from one another in an axial direction of said inner bore.

2. A temperature compensated device for use in optical communication as claimed in claim 1, wherein an area between said particular positions are also fixed to said base member.

3. A temperature compensated device for use in optical communication as claimed in claim 1, wherein said base member comprises a powder sintered body.

**4.** A temperature compensated device for use in optical communication as claimed in claim 1, wherein said base member contains β-eucryptite crystals precipitated therein with a large number of microcracks formed in said crystals.

**5.** A temperature compensated device for use in optical communication as claimed in claim 1, wherein said base member contains β-quartz solid solution crystals precipitated therein with a large number of microcracks formed in said crystals.

**6.** A temperature compensated device for use in optical communication as claimed in claim 1, wherein said base member comprises a circular tube member defining said inner bore, said circular tube member carrying out positioning upon connection of said optical component.

**7.** A temperature compensated device for use in optical communication as claimed in claim 1, wherein said base member comprises a rectangular tube member defining said inner bore, said rectangular tube member carrying out positioning upon connection of said optical component.

**8.** A temperature compensated device for use in optical communication as claimed in claim 1, wherein said base member has a structure in which at least one end portion in said axial direction has a tapered shape reduced in diameter towards its tip end.

**9.** A temperature compensated device for use in optical communication as claimed in claim 1, wherein said base member is provided with at least one small hole communicating with said inner bore.

**10.** A temperature compensated device for use in optical communication as claimed in claim 1, wherein said inner bore has a structure in which at least one end portion in said axial direction has a tapered shape increased in diameter towards its tip end.

**11.** A temperature compensated device for use in optical communication as claimed in claim 1, wherein said base member is prepared from a powder sintered body containing, as a main component, β-eucryptite prepared by the solid-phase method.

**12.** A temperature compensated device for use in optical communication as claimed in claim 1, wherein said base member is produced by a plurality of parts coupled to one another.

**13.** A temperature compensated device for use in optical communication as claimed in claim 1, wherein said base member is produced by a glass having a composition of, by weight percent, 43-63 % $SiO_2$, 33-43 % $Al_2O_3$, 7-11 % $Li_2O$, -6 % $ZrO_2$, 0-6 % $TiO_2$, 0-6 % $SnO_2$ and 0-6 % $P_2O_5$.

**14.** A temperature compensated device for use in optical communication as claimed in claim 1, wherein said base member is produced by a glass having a composition of, by weight percent, 50-75 % $SiO_2$, 15-30 % $Al_2O_3$, 3-7 % $Li_2O$, 0-5 % $ZrO_2$, 0-6 % $TiO_2$, 0-7 % $SnO_2$ and 0-6 % $P_2O_5$.

# FIG. 1

# FIG. 2

# FIG. 3

## FIG. 4

## FIG. 5

## FIG. 6

## FIG. 7

## FIG. 8

## FIG. 9

## FIG. 10

## INTERNATIONAL SEARCH REPORT

| | International application No. |
|---|---|
| | PCT/JP00/01239 |

A. CLASSIFICATION OF SUBJECT MATTER
   Int.Cl⁷ G02B 6/10, 6/16, 6/36   C04B 35/18

According to International Patent Classification (IPC) or to both national classification and IPC

B. FIELDS SEARCHED

Minimum documentation searched (classification system followed by classification symbols)
   Int.Cl⁷ G02B 6/00-6/54,
            C03C 1/00-14/00, C04B 35/00-35/22

Documentation searched other than minimum documentation to the extent that such documents are included in the fields searched
   Jitsuyo Shinan Koho          1922-1996    Toroku Jitsuyo Shinan Koho  1994-2000
   Kokai Jitsuyo Shinan Koho    1971-2000    Jitsuyo Shinan Toroku Koho  1996-2000

Electronic data base consulted during the international search (name of data base and, where practicable, search terms used)
   JOIS (JICST Kagaku Gijutsu Bunken File, JICST Sokuhou File)
   IEE Electronic Library

C. DOCUMENTS CONSIDERED TO BE RELEVANT

| Category* | Citation of document, with indication, where appropriate, of the relevant passages | Relevant to claim No. |
|---|---|---|
| X<br>Y | M. Kato et al., "The Package with glass ceramics of Thermal compensated Fiber Bragg Gratings", Lecture proceedings distributed at the general meeting in 1999, The Institute of Electronics, Information and Communication Engineers, *Electronics 1*, 08 March, 1999, (08.03.99), p.208 | 1<br>2-14 |
| Y | IWASHIMA T ET AL: Temperature compensation technique for fiber Bragg gratings using liquid crystalline polymer tubes; Electronics Letters, Vol.44, No.5, 27th February 1997, pp.417-418 | 2 |
| Y | IWASHIMA T ET AL"A novel temperature compensation technique for fiber Bragg gratings using liquid crystalline polymer tubes", Lecture proceedings distributed at the general meeting in 1997, The Institute of Electronics, Information and Communication Engineers, *Electronics 1*, 06 March, 1997 (06.03.97), p.339 | 2 |
| Y | WO, 97/28480, A2 (CORNING INC.),<br>07 August, 1997 (07.08.97)<br>& EP, 880718, A2   & JP, 2000-503967, A | 3-5,11,13-14 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 May, 2000 (30.05.00) | 13 June, 2000 (13.06.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

INTERNATIONAL SEARCH REPORT

International application No.

PCT/JP00/01239

C (Continuation). DOCUMENTS CONSIDERED TO BE RELEVANT

| Category* | Citation of document, with indication, where appropriate, of the relevant passages | Relevant to claim No. |
|---|---|---|
| Y | WO, 97/26572, A1 (CORNING INC.),<br>24 July, 1997 (24.07.97)<br>& EP, 875012, A1 & JP, 2000-503415, A | 3-5,11,13 |
| Y | US, 4018612, A (CORNING GLASS WORKS),<br>19 April, 1977 (19.04.77)<br>& JP, 52-117311, A & GB, 1515827, A<br>& FR, 2357494, A | 3-5,11,14 |
| Y | JP, 63-201034, A (Agency of Industrial Science and Technology),<br>19 August, 1988 (19.08.88) (Family: none) | 3-5,11,14 |
| Y | JP, 1-246177, A (Inax Corp.),<br>02 October, 1989 (02.10.89) (Family: none) | 3-5,11,13-14 |
| Y | JP, 10-1359, A (Chichibu Onoda Cement Corp.),<br>06 January, 1998 (06.01.98) (Family: none) | 3-5,11,13-14 |
| Y | JP, 56-19017, A (Nippon Telegr. & Teleph. Corp. <NTT>),<br>23 February, 1981 (23.02.81) (Family: none) | 6-7,9 |
| Y | EP, 302750, A2 (CORNING GLASS WORKS),<br>08 February, 1989 (08.02.89)<br>& JP, 1-66603, A & US, 4763970, A | 6,10 |
| Y | JP, 8-286040, A (Sumitomo Electric Industries, Ltd.),<br>01 November, 1996 (01.11.96) (Family: none) | 7,12 |
| Y | JP, 5-232349, A (Sumitomo Electric Industries, Ltd.),<br>10 September, 1993 (10.09.93) (Family: none) | 7,12 |
| Y | JP, 6-34846, A (NEC Corporation),<br>10 February, 1994 (10.02.94) (Family: none) | 8 |
| Y | US, 5367589, A (AT&T Bell Laboratories),<br>22 November, 1994 (22.11.94)<br>& EP, 650083, A2 & JP, 7-181334, A | 9-10 |
| Y | Y. Hori et al., "Temperature-compensated Packages For Fiber Bragg Gratings", Lecture proceedings distributed at the general meeting in 1997, The Institute of Electronics, Information and Communication Engineers, *Electronics 1*, 06 March, 1997 (06.03.97), p.231 | 12 |
| Y | US, 5042898, A (United Technologies Corp.),<br>27 August, 1991 (27.08.91)<br>& WO, 91/10151, A1 & JP, 5-503170, A | 12 |
| A | WEIDMAN D L ET AL: "A novel negative expansion substrate material for athermalizing fiber Bragg gratings"; ECOC '96., PROCEEDINGS OF EUROPEAN CONFERENCE ON OPTICAL COMMUNICATION, OSLO, NORWAY, 15-19 SEPT. 1996, pp.61-64 | 1-5,11,13-14 |
| A | WO, 97/14983, A1 (Sumitomo Electric Industries, Ltd.),<br>24 April, 1997 (24.04.97)<br>& EP, 798573, A1 | 1 |
| A | EP, 812810, A2 (CORNING INC.),<br>17 December, 1997 (17.12.97) | 1-12 |

Form PCT/ISA/210 (continuation of second sheet) (July 1992)

## INTERNATIONAL SEARCH REPORT

International application No,

PCT/JP00/01239

| C (Continuation).  DOCUMENTS CONSIDERED TO BE RELEVANT | | |
|---|---|---|
| Category* | Citation of document, with indication, where appropriate, of the relevant passages | Relevant to claim No. |
| | & JP, 10-73740, A  & WO, 99/06859, A1 | |
| A | US, 5694503, A (Lucent Technologies Inc.), 02 December, 1997 (02.12.97) & JP, 10-96827, A  & EP, 828169, A2 | 1-12 |
| P,X | Akihiko Sakamoto et al., "Adhesion Properties of Negative Expansion Ceramic Substrate for Athermalization of Fiber Bragg Gratings", Lecture proceedings distributed at Electronics Society meeting in 1999, The Institute of Electronics, Information and Communication Engineers, Vol.1, 16 August, 1999 (16.08.99), p.201 | 1 |
| P,X | JP, 3003695, B1 (Sumitomo Electric Industries, Ltd.), 31 January, 2000 (31.01.00), Par. No. [0056]; Fig. 7  (Family: none) | 1-2,12 |
| P,A | WO, 99/64898, A2 (CORNING INC.), 16 December, 1999 (16.12.99)  (Family: none) | 1-12 |
| P,A | EP, 995723, A1 (Kabushiki Kaisha Ohara), 26 April, 2000 (26.04.00)  (Family: none) | 1-12 |

Form PCT/ISA/210 (continuation of second sheet) (July 1992)

## INTERNATIONAL SEARCH REPORT

| International application No. |
| --- |
| PCT/JP00/01239 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

In inventions described in Claims 1 to 12, the same or corresponding technical matters are matters described in Claim 1 which are described in the following Document 1, and do not define a contribution which makes over the prior art. Therefore, those matters are not considered to involve special technical features.

Accordingly, there is no technical relationship among those inventions in Claims 1 to 12 that forms a single general inventive concept in terms of the second sentence in PCT Rule 13.2.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1992)